# EUROPÄISCHE PATENTSCHRIFT

(11) **EP 0 563 547 B1**
(45) Veröffentlichungstag und Bekanntmachung des Hinweises auf die Patenterteilung: **28.05.1997**
(21) Anmeldenummer: 93102100.0
(22) Anmeldetag: 11.02.1993
(51) Int. Cl.: B60J 1/20

(54) **Cabrio-Verdeck mit einer flexiblen Sichtscheibe**
Cabriolet-top with a flexible window pane
Capote pour cabriolet avec une vitre flexible

(30) Priorität: 31.03.1992 DE 4210475
(43) Veröffentlichungstag der Anmeldung: 06.10.1993
(73) Patentinhaber: Dr.Ing.h.c. F. Porsche Aktiengesellschaft, 70435 Stuttgart (DE)
(72) Erfinder: Schnepf, Wolfgang, W-7135 Wiernsheim-Serres (DE)

(56) Entgegenhaltungen:
- EP-A- 0 261 323
- DE-A- 2 615 567

## Beschreibung

Die Erfindung betrifft ein Cabrio-Verdeck mit einer flexiblen Sichtscheibe aus Kunststoff, die eine Schutzabdeckung aufweist. Ein solches Cabrio-Verdeck ist aus der EP-A-0 261 323 bekannt.

An flexible Sichtscheiben von Kraftfahrzeugen werden verschiedene, sich zum Teil widersprechende Anforderungen gestellt. Zum einen müssen derartige Sichtscheiben aus Kunststoff gute optische Eigenschaften aufweisen, um eine klare und verzerrungsfreie Durchsicht zu gewährleisten. Dabei müssen sie aber hinreichend steif sein, damit sie sich bei geschlossenem Verdeck in eine möglichst wellenfreie Form legen.

Zum anderen müssen die Sichtscheiben aber hinreichend flexibel sein, damit sie den Faltvorgang des Verdecks beim Öffnen mitmachen können, ohne dabei zu knicken oder bleibende Verformungen zu erleiden.

Die derzeit bei serienmäßigen Cabrios verwendeten flexiblen Sichtscheiben aus Kunststoff (z.B. Weich-PVC) erfüllen die an sie gestellten Anforderungen bezüglich Optik und Elastizität.

Nachteilig an diesen flexiblen Sichtscheiben ist jedoch, daß sie außerordentlich kratzempfindlich sind. So dürfen Cabrios mit flexibler Sichtscheibe laut den Betriebsanleitungen der Fahrzeughersteller nicht durch automatische Waschanlagen fahren, da die Bürsten der Waschanlagen die Sichtscheiben verkratzen. Wird das Fahrzeug trotzdem durch eine automatische Waschanlage gefahren, so wird nach einigen Waschvorgängen eine Erneuerung bzw. ein Austausch der flexiblen Sichtscheibe erforderlich, was einen Werkstattaufenthalt und relativ hohe Kosten zur Folge hat.

Die Stoffbespannung des Verdecks hingegen übersteht auch ein mehrmaliges Durchfahren einer Waschanlage problemlos.

Aufgabe der Erfindung ist es, an einem Cabrio-Verdeck mit einer flexiblen Sichtscheibe solche Vorkehrungen zu treffen, daß ein Durchfahren einer automatischen Waschanlage möglich ist, ohne daß dabei die flexible Sichtscheibe verkratzt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Anbringung einer Schutzabdeckung auf die zuvor von Hand gereinigte flexible Sichtscheibe das Durchfahren einer automatischen Waschanlage zur Reinigung des gesamten Fahrzeugs ermöglicht wird, ohne daß dabei die flexible Sichtscheibe durch die Waschbürsten verkratzt wird. Dadurch werden die hohen Kosten für die Erneuerung der flexiblen Sichtscheibe eingespart. Die an die Außenseite der Sichtscheibe aufgesetzte, abnehmbare Schutzabdeckung läßt sich einfach und kostengünstig herstellen und schnell am Fahrzeug montieren bzw. demontieren.

Bei mehrteiliger, faltbarer Ausbildung benötigt sie wenig Aufnahmeraum im Fahrzeug. Die Schnellverschlüsse (Druckknopf, Klettenbandverschluß oder Reißverschluß) ermöglichen eine funktionsgerechte und einfache Montage/Demontage der Schutzabdeckung.

Ein Ausführungsbeispiel der Erfindung ist in der Zeichnung dargestellt und wird im folgenden näher erläutert.
Es zeigt
- Fig. 1: ein Klappverdeck mit einer heckseitigen Sichtscheibe in Rückansicht,
- Fig. 2: einen Schnitt längs der Linie II-II der Fig. 1,
- Fig. 3: eine Ansicht entsprechend Fig. 1 mit der aufgesetzten Schutzabdeckung,
- Fig. 4: einen Schnitt längs der Linie IV-IV der Fig. 3 mit der aufgesetzten Schutzabdeckung,
- Fig. 5: einen Schnitt durch den Randbereich der Schutzabdeckung mit einer weiteren Ausführungsform einer Befestigung,
- Fig. 6: eine perspektivische Ansicht auf eine weitere Ausführungsform einer Befestigung für die Schutzabdeckung.

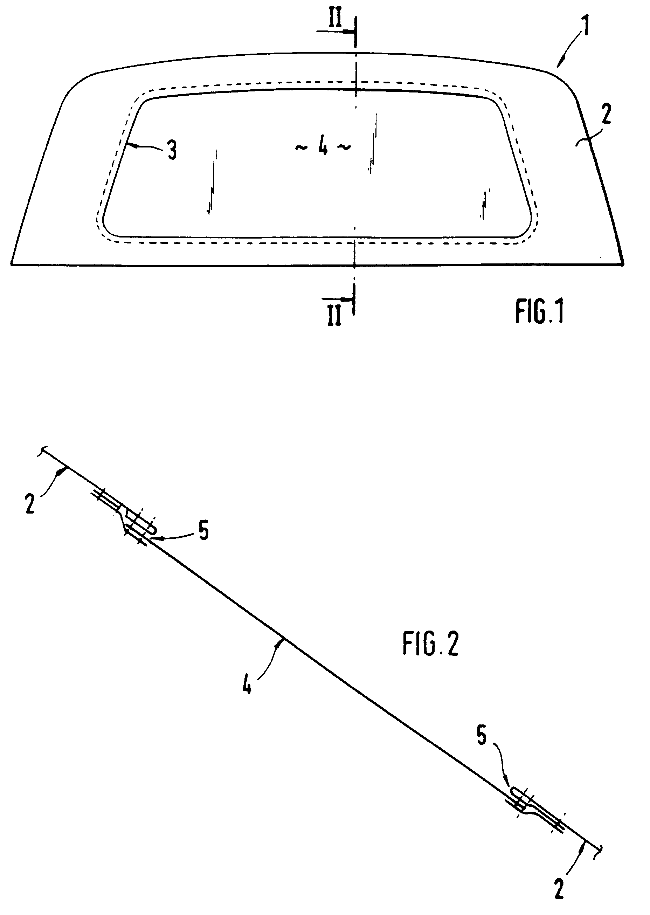

Von einem nicht näher dargestellten Cabriolet ist in Fig. 1 ein Klappverdeck 1 in vollständig aufgeklapptem Zustand (Schließstellung) gezeigt, das mit einem textilen Bezug 2 versehen ist. Dieser hat an der Heckseite eine trapezförmige Ausnehmung 3, in die eine aus transparentem, flexiblem Kunststoff bestehende Sichtscheibe 4 eingesetzt ist, welche durch Vernähen längs ihres Randes mit einem U-förmigen Aufnahmeabschnitt 5 des Bezuges 2 verbunden ist.

Die Sichtscheibe 4 ist beispielsweise aus Weich-PVC oder einem ähnlichen Kunststoff hergestellt und bildet die Heckscheibe des Cabriolets.

Um das Cabriolet in einer automatischen Waschanlage reinigen zu können, ist vorgesehen, daß nach vorangegangener manueller Reinigung der flexiblen Sichtscheibe 4 eine Schutzabdeckung 6 auf die Außenseite des Cabrio-Verdecks (Klappverdeck) aufsetzbar ist, die die flexible Sichtscheibe 4 vor Kratzern durch die nicht näher dargestellten Waschbürsten der Waschanlage schützt.

Die Schutzabdeckung 6 ist aus einem laugenbeständigen Kunststoff wie Polypropylen, ABS oder dergleichen gefertigt und kann transparent oder farbig ausgebildet sein.

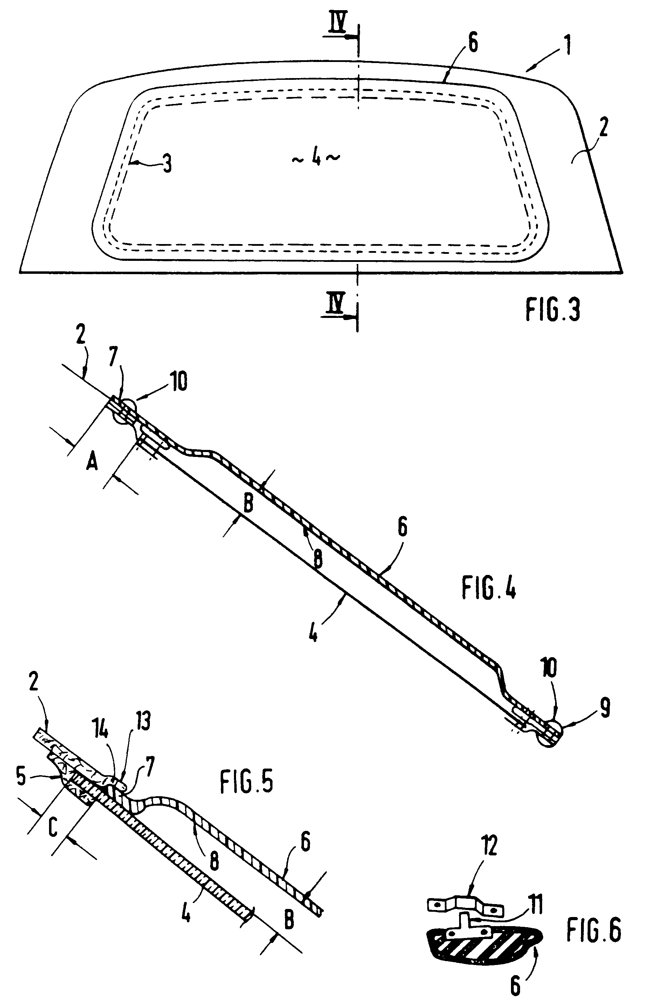

Gemäß Fig. 4 ist eine einteilige Schutzabdeckung 6 vorgesehen, die die flexible Sichtscheibe 4 allseitig um einen Betrag A überragt.

Die Schutzabdeckung 6 kann jedoch auch mehrteilig ausgebildet sein, wobei sich die einzelnen Abschnitte bei abgenommener Schutzabdeckung 6 zusammenfalten lassen und so lediglich einen geringen Stauraum im Fahrzeug benötigen.

Die in den Fig. 3 und 4 dargestellte Schutzabdeckung 6 wird durch ein formsteifes tiefgezogenes Kunststoffteil gebildet, dessen abgesetzter Randbereich 7 am textilen Bezug 2 aufliegt.

Ein an den Randbereich 7 anschließender innerer Abschnitt 8 der Schutzabdeckung 6 verläuft mit Abstand B zur flexiblen Sichtscheibe 4.

Die Schutzabdeckung 6 ist über zumindest örtlich angeordnete Schnellverschlüsse 9 lösbar mit dem Klappverdeck verbindbar. Die Schnellverschlüsse 9 können durch Druckknöpfe 10 (siehe Fig. 3) oder durch Klettenbandverschlüsse oder einen umfangseitigen Reißverschluß gebildet werden, wobei die beiden letzteren Ausführungsmöglichkeiten nicht näher dargestellt sind.

Es besteht auch die Möglichkeit, an der Schutzabdeckung 6 umfangseitig örtlich nach außen hin abstehende Haken 11 anzubringen, die in korrespondierende Aufnahmen 12 des Cabrio-Verdecks einsetzbar sind.

Ferner ist eine Klemmbefestigung 13 zur funktionsgerechten Halterung der Schutzabdeckung 6 am Cabrio-Verdeck denkbar. Bei dieser Ausführung ist die Schutzabdeckung 6 in der Draufsicht gesehen geringfügig kleiner als die flexible Sichtscheibe 4 und der abgesetzte Randbereich 7 untergreift einen äußeren Schenkel 14 des die flexible Sichtscheibe 4 überragenden Aufnahmeabschnittes 5.

Es besteht ferner die Möglichkeit, die Schutzabdeckung 6 als Rollo auszubilden, das bei Bedarf über die flexible Sichtscheibe 4 gezogen werden kann (nicht näher dargestellt).

## Patentansprüche

1. Cabrio-Verdeck mit einer flexiblen Sichtscheibe aus Kunststoff, die eine Schutzabdeckung (6) aufweist, dadurch gekennzeichnet, daß zum Zwecke der Vermeidung von Kratzern beim Durchfahren von Waschanlagen auf die Außenseite der flexiblen Sichtscheibe (4) die Schutzabdeckung (6) aufsetzbar ist, wobei die Schutzabdeckung (6) über eine Einrichtung, insbesondere über Schnellverschlüsse (9), Haken (11) und Aufnahme (12) oder Klemmbefestigung (13), am Verdeck (1) festlegbar ist und daß die Schutzabdeckung (6) nach Lösen der Einrichtung wieder abnehmbar ist.

2. Cabrio-Verdeck nach Anspruch 1, dadurch gekennzeichnet, daß die Schutzabdeckung (6) aus einem laugenbestätigen Kunststoff gefertigt ist.

3. Cabrio-Verdeck nach Anspruch 1, dadurch gekennzeichnet, daß die Schutzabdeckung (6) einteilig ausgebildet ist.

4. Cabrio-Verdeck nach Anspruch 1, dadurch gekennzeichnet, daß die Schutzabdeckung (6) mehrteilig ausgebildet ist, wobei die einzelnen Teile faltbar miteinander verbunden sind.

5. Cabrio-Verdeck nach Anspruch 1, dadurch gekennzeichnet, daß die Schutzabdeckung (6) durch ein formsteifes, tiefgezogenes Kunststoffteil gebildet wird, dessen abgesetzter Randbereich (7) am Verdeck (1) festlegbar ist.

6. Cabrio-Verdeck nach Anspruch 5, dadurch gekennzeichnet, daß ein an den Randbereich (7) anschließender innerer Abschnitt (8) der Schutzabdeckung (6) mit Abstand (B) zur flexiblen Sichtscheibe (4) verläuft.

7. Cabrio-Verdeck nach Anspruch 1, dadurch gekennzeichnet, daß an der Schutzabdeckung (6) umfangseitig örtlich abstehende Haken (11) angebracht sind, die in Aufnahmen (12) des Cabrio-Verdecks (1) einsetzbar sind.

8. Cabrio-Verdeck nach Anspruch 1, dadurch gekennzeichnet, daß die Klemmbefestigung (13) durch einen abgesetzten Randbereich (7) der Schutzabdeckung (6) gebildet wird, der einen die flexible Sichtscheibe (4) überragenden Schenkel (14) eines U-förmigen Aufnahmeabschnitts (5) abschnittsweise untergreift.

## Claims

1. A cabriolet top with a flexible window of plastics material comprising a protective screen (6), **characterized in that**, in order to prevent scratches when passing through washing installations, the protective screen (6) can be positioned on the exterior of the flexible window (4), wherein the protective screen (6) can be secured to the top (1) by way of a device, in particular by way of quick-acting closure means (9), hooks (11) and receiving means (12), or a clamping fastening (13), and the protective screen (6) can be removed again after the device is released.

2. A cabriolet top according to Claim 1, **characterized in that** the protective screen (6) is produced from an alkali-proof plastics material.

3. A cabriolet top according to Claim 1, **characterized in that** the protective screen (6) is formed in one piece.

4. A cabriolet top according to Claim 1, **characterized in that** the protective screen (6) is formed in a plurality of parts, wherein the individual parts are joined together in a foldable manner.

5. A cabriolet top according to Claim 1, **characterized in that** the protective screen (6) is formed by a dimensionally stable, moulded plastics part, the offset edge area (7) of which can be fastened to the top (1).

6. A cabriolet top according to Claim 5, **characterized in that** an inner portion (8) of the protective screen (6) adjoining the edge area (7) extends at a distance (**B**) from the flexible window (4).

7. A cabriolet top according to Claim 1, **characterized in that** locally projecting hooks (11) are attached to the periphery of the protective screen (6), the said hooks (11) being insertible in receiving means (12) in the cabriolet top (1).

8. A cabriolet top according to Claim 1, **characterized in that** the clamping fastening (13) is formed by an offset edge area (7) of the protective screen (6) engaging in part under a flange (14) - projecting over the flexible window (4) - of a U-shaped receiving portion (5).

## Revendications

1. Capote pour cabriolet avec une vitre flexible en matière plastique, présentant un recouvrement protecteur (6), caractérisée en ce que, dans le but d'éviter des rayures lors du passage dans des installations de lavage, le recouvrement protecteur (6) peut être appliqué sur la face extérieure de la vitre flexible (4), le recouvrement protecteur (6) étant susceptible d'être fixé sur la capote (1) par l'intermédiaire d'un dispositif, en particulier par l'intermédiaire de fermetures rapides (9), de crochets (11) et d'un logement (12) ou d'une fixation à serrage (13), en ce que le recouvrement protecteur (6) est de nouveau peut être enlevé après desserrement-désolidarisation du dispositif.

2. Capote pour cabriolet selon la revendication 1, caractérisée en ce que le recouvrement protecteur (6) est réalisé en matière synthétique résistant aux lessives.

3. Capote pour cabriolet selon la revendication 1, caractérisée en ce que le recouvrement protecteur (6) est réalisé d'une seule pièce.

4. Capote pour cabriolet selon la revendication 1, caractérisée en ce que le recouvrement protecteur (6) est réalisé en plusieurs parties, les différentes parties étant reliées ensemble d'une façon permettant un pliage.

5. Capote pour cabriolet selon la revendication 1, caractérisée en ce que le recouvrement protecteur (6) est constitué par une partie en matière plastique à forme rigide, obtenue par étirage étirage profond, et dont la zone de bordure (7) en retrait peut être fixée sur la capote (1).

6. Capote pour cabriolet selon la revendication 5, caractérisée en ce qu'une section intérieure (8), se raccordant à la zone de bordure (7), du recouvrement protecteur (6), s'étend à une distance (B) vis-à-vis de la vitre flexible (4).

7. Capote pour cabriolet selon la revendication 1, caractérisée en ce que des crochets (11), peuvent être insérés dans des logements (12) de la capote de cabriolet (1), font saillie localement en périphérie sur le recouvrement protecteur (6).

8. Capote pour cabriolet selon la revendication 1, caractérisée en ce que la fixation à serrage (13) est constituée par une zone de bordure (7) en retrait du recouvrement protecteur (6), qui saisit par le dessous une branche (14), dépassant de la vitre flexible (4), d'une section de logement (5) en forme de U.
